# EUROPÄISCHE PATENTSCHRIFT

(11) **EP 3 444 524 B1**
(45) Veröffentlichungstag und Bekanntmachung des Hinweises auf die Patenterteilung: **11.12.2019**
(21) Anmeldenummer: 17186823.5
(22) Anmeldetag: 18.08.2017
(51) Int. Cl.: F21S 8/06, F21V 17/12, F21V 8/00, F21V 29/70, F21Y 103/10, F21Y 115/10

(54) **LEUCHTE**
LUMINAIRE
LUMINAIRE

(43) Veröffentlichungstag der Anmeldung: 20.02.2019
(73) Patentinhaber: Engel, Hartmut S., 71634 Ludwigsburg (DE)
(72) Erfinder: Engel, Hartmut S., 71634 Ludwigsburg (DE)
(74) Vertreter: Manitz Finsterwald Patent- und Rechtsanwaltspartnerschaft mbB

(56) Entgegenhaltungen:
- EP-A1- 3 026 326
- EP-A1- 3 217 072
- CN-U- 203 718 576
- DE-U1-202014 104 031
- US-A1- 2016 033 712
- US-A1- 2017 205 567

## Beschreibung

Die Erfindung betrifft eine Leuchte, insbesondere Pendelleuchte, mit einer eine raumseitige Direktlichtfläche bildenden Lichtleitscheibe und einer zumindest einer Längsseite der Lichtleitscheibe zugeordneten streifenförmigen Anordnung von LEDs zur Einkopplung von Licht in die Lichtleitscheibe.

Leuchten dieser Art, die im Regelfall zur Innenraumbeleuchtung dienen, zeichnen sich durch eine flache Bauweise, einen überraschenden Wechsel zwischen Transparenz und leuchtender Fläche aus und nutzen die Vorteile der Langlebigkeit und des geringen Energieverbrauchs der als Leuchtmittel eingesetzten LEDs. Dokument EP3026326A1 und Dokument DE202014104031 U1 zeigen Pendelleuchten.

Aufgabe der vorliegenden Erfindung ist es, Leuchten dieser Art unter gleichzeitiger Minimierung der Komplexität der konstruktiven Aufbaustruktur, der Werkzeugkosten und des Fertigungs- und Montageaufwands so auszubilden, dass unter Realisierung eines ultraflachen Erscheinungsbildes der Leuchte eine gleichmäßige Lichtfläche und eine besonders breite Lichtverteilung im Raum erhalten wird, und zwar raumfüllend und blendfrei.

Gelöst wird diese Aufgabe nach der Erfindung im Wesentlichen dadurch, dass die rahmenlos ausgebildete Lichtleitscheibe über ihren schmalseitigen Umfang mit einer Reflexionsschicht und mittig mit einer schmalen, langgestreckten Ausnehmung zur Aufnahme einer Funktionseinheit versehen ist, dass die Funktionseinheit zumindest einen sich im Wesentlichen über die Länge der Ausnehmung und in diese Ausnehmung erstreckenden Hohlkörper in Form eines Multifunktions-Hohlprofils (10) mit einem Zentralteil und seitlich angeformten, Profilnuten aufweisenden Flügelteilen umfasst, dass am Zentralteil seitlich und der Lichtleitscheibe gegenüberliegend streifenförmig angeordnete LEDs angebracht sind, dass die Lichtleitscheibe zwischen den Flügelteilen und einer mit dem Zentralteil verschraubbaren, in ihrer Breite zumindest im Wesentlichen der Breite des Multifunktions-Hohlprofils entsprechenden, insbesondere die Stirnseiten der Lichtleitscheibe über Abwinkelungen umgreifende Trägerfläche gehaltert ist, und dass beiderseits des Zentralteils die reflektierend ausgebildete Trägerfläche und eine ihr jeweils gegenüberliegende, an einem Flügelteil anliegende, reflektierende Zwischenlage eine Lichtverteilungs- und Ausblendkammer bilden, in der die den streifenförmigen LEDs zugeordneten innenliegenden Lichteinkopplungsbereiche der Lichtleitscheibe aufgenommen sind.

Durch die rahmenlose Lichtfläche und die mittige Integration eines Multifunktions-Hohlprofils in Form eines Strangpressteils in die Lichtleitscheibe wird ein stabiles Verbundkonzept und ein besonders flaches Erscheinungsbild ermöglicht.

Das Multifunktions-Hohlprofil, das sich praktisch über die gesamte Länge der Leuchte erstreckt, bildet einen äußerst wirksamen Kühlkörper, der die im Betrieb entstehende Wärme über seine Gesamtstruktur sehr effizient nach außen ableitet. Die so erzielbare geringe Betriebstemperatur trägt wesentlich zu einer deutlich verlängerten Lebensdauer der LEDs bei voller Performance bei.

Die Vielzahl der eng aneinandergereihten LEDs muss für die praktisch geforderte Lichtleistung im Regelfall nur mit etwa 50% der maximal möglichen Leistung bestromt werden, wodurch einerseits wesentlich weniger Wärme erzeugt und andererseits thermische Leistungsreserven für eine gegebenenfalls gewünschte "Tuning White"-Bestückung zur Tageslichtsteuerung bereitgehalten werden können.

Trotz der ausgeprägten Flachheit der Leuchte wird somit ein optimales Thermomanagement für die Kühlung der LEDs bei allen denkbaren Betriebszuständen der Leuchte sichergestellt.

Von besonderer Bedeutung ist, dass die erfindungsgemäß ausgebildeten Lichtverteilungs- und Ausblendkammern eine optimale Kanteneinstrahlung einerseits und ausgeprägte Reflexions- bzw. Lichtumlenkungseffekte im Bereich dieser Lichtkammern erbringen, was eine sehr gleichmäßige, streifenfreie Lichtverteilung von innen nach außen in der Lichtleitscheibe sicherstellt.

Das aus einem Zentralteil und den beiderseits des Zentralteils vorgesehenen Flügelteilen bestehende Multifunktions-Hohlprofil stellt nicht nur einen optimalen Kühlkörper dar, sondern ermöglicht eine einfache und exakte Montage der wenigen Einzelkomponenten in Sandwichbauweise durch Schraubverbindungen, die zu einer stabilen Verbundeinheit führen.

Die hohe Stabilität und vor allem die hohe Biegesteifigkeit wird durch die Verschraubung der metallischen, mit eingeprägten Gewindebuchsen versehenen Trägerfläche mit dem Zentralteil erzielt. Durch diese Verschraubung wird aus dem bodenseitig geschlitzten, d.h. bodenseitig offenen Zentralteil ein geschlossenes und damit besonders biegesteifes Hohlprofil, das die abgependelte Leuchte über die gesamte Länge durchbiegungsfrei definiert.

Eine bevorzugte Ausführungsform der erfindungsgemäßen Leuchte zeichnet sich dadurch aus, dass das kastenförmig ausgebildete und bodenseitig einen Längsschlitz aufweisende Zentralteil mit der metallischen Trägerfläche über in diese Trägerfläche eingepresste Gewindebuchsen verschraubbar ist und die über insbesondere einen Verbindungssteg mit dem Zentralteil verbundenen Flügelteile Profilnuten für verstellbare Seilabhängungselemente, Schraubkanäle zur Befestigung von Endteilen sowie Profilnuten zur Aufnahme von Kupplungselementen zur mechanischen Verbindung von aneinandergereihten Einzelleuchten aufweisen.

Das Multifunktions-Hohlprofil schafft damit die Basis für eine modulare Erweiterung der Leuchte zur Doppelleuchte und zur Ausbildung von Lichtbändern frei wählbarer Länge.

Die Gestaltung des Multifunktions-Hohlprofils ermöglicht es, jeweils oberhalb der streifenförmigen LEDs zwischen dem Zentralteil und dem mit Profilnuten versehenen Bereich der beiden Flügelteile jeweils einen Verkabelungsraum zu schaffen, in dem vorzugsweise Steckklemmen zur Verbindung aufeinanderfolgend angeordneter LED-Streifenabschnitte sowie zur Verbindung mit den elektronischen Komponenten der Leuchte aufgenommen werden können.

Durch die über Steckverbindungen ermöglichte einfache Zusammenschaltung einzelner LED-Streifeneinheiten und die Verbindung der Gesamtanordnung über kurze Verbindungsleitungen mit den zugehörigen elektronischen Komponenten der Leuchte wird die Montage erleichtert und die Funktionssicherheit erhöht.

Zur Aufnahme aller erforderlichen elektronischen Komponenten wie Treiber, Controller und dergleichen ist eine komplett montierte Elektronikeinheit in einem separaten Elektronikgehäuse vorgesehen, das bevorzugt über einen Nuteingriff auf dem Zentralteil positioniert und durch Verschraubung befestigt werden kann. Alternativ kann diese Elektronik auch an einer Decke befestigt werden, wobei in diesem Falle die Seilaufhängungen als Niedervoltleitungen zur Verbindung mit den LEDs benutzt werden.

Besonders günstig und einfach lässt sich im kastenförmig ausgebildeten, bodenseitig geschlitzten Zentralteil eine Sensoreinheit zur Tageslichtsteuerung und/oder Präsenzmeldung anbringen, indem diese formschlüssig im Bodenteil des Zentralteils positioniert wird und sich mit ihrem Sensorbereich durch eine entsprechende Ausnehmung im Trag- und Reflexionsprofil erstreckt.

Die für diese Sensoreinheit benötigte Verbindungsleitung zur Elektronik wird direkt über entsprechende Durchlässe in das Elektronikgehäuse geführt, wobei dazu ein abgeschirmtes Kabel mit Mikrostecker verwendet wird.

Zur Effizienzsteigerung der Leuchte wird in der vom Raum abgewandten Oberfläche der Lichtleitscheibe vorzugsweise eine Mikrostruktur eingebracht, die aus einer Vielzahl von entweder direkt aneinandergrenzenden, gering beabstandeten oder geringfügig ineinandergreifenden Doppelpunkt-Auskoppelprismen besteht.

Eine bevorzugte Ausgestaltung der erfindungsgemäßen Mikrostruktur, die eine extrem breite Lichtverteilung indirekt und direkt erbringt, zeichnet sich dadurch aus, die definierten Mittelachsen einer ersten Gruppe von Doppelpunkt-Auskoppelprismen auf einer ersten Geraden und die Mittelachsen einer zweiten Gruppe von Doppelpunkt-Auskoppelprismen auf einer zweiten Geraden gelegen sind und diese beiden Geraden unter einem vorgebbaren, insbesondere spitzen Winkel zueinander verlaufen.

Für die Mischung von zwei Lichtfarben 6500 K und 2700 K können LED-Streifenanordnungen aus kleinflächigen, dicht aneinandergrenzend angeordneten LEDs mit jeweils wechselnder Farbtemperatur vorgesehen werden, die durch einen Zweikanal-Treiber ansteuerbar sind.

Eine weitere Ausgestaltung der Erfindung zeichnet sich dadurch aus, dass mit beiden Stirnseiten des Multifunktions-Hohlprofils jeweils ein Befestigungsschenkel eines Endteils verschraubt ist, dessen abgewinkelter Abdeckschenkel an der Lichtleitscheibe anliegt und sich bis zum Ende der Lichtleitscheibe erstreckt, wobei in der Schenkelfläche und dem ihr gegenüberliegenden Endbereich der Trägerfläche einander entsprechende Ausnehmungen vorgebbarer Form vorgesehen sind.

Durch die mögliche Formgebung der Ausnehmungen lassen sich unverwechselbare Erscheinungsbilder der jeweiligen Leuchten erzielen, und es lässt sich auf diese Weise kostengünstig eine Individualisierung einzelner Projekte erreichen.

Durch einfache mechanische Elemente können die Multifunktionsprofile stabil zu Mehrfach-Leuchten gekoppelt werden, wobei die elektronische Durchverdrahtung zwischen den Elektronikgehäusen, die in einer obenliegenden Profilnut verläuft, mit einem niedrigen Extrusionsprofil abgedeckt werden kann.

Konkret realisiert wird diese modulare Erweiterung insbesondere dadurch, dass zur Ausbildung einer Doppelleuchte oder zur Ausbildung von Lichtbändern Multifunktions-Hohlprofile einander stirnseitig kontaktierend über formschlüssig in eine deckwandseitige Nut des Zentralteils und in Profilnuten der Flügelteile eingreifende Kopplungs- und Führungslaschen verbindbar sind.

Die in die Nut des Zentralteils eingreifende Lasche, die mit dem Zentralteil des Multifunktions-Hohlprofils verschraubbar ist, besteht bevorzugt aus einem gelaserten Edelstahlelement, und die beiden Führungslaschen werden zweckmäßigerweise von zwei gelaserten Kunststoffteilen gebildet, welche die Profile während der Montage zusammenhalten.

Die Trägerfläche ist bevorzugt an ihren Enden in der Weise abgewinkelt, dass sie die Lichtleitscheibe an beiden Enden umfasst, und diese ästhetisch ansprechende Lösung bleibt auch erhalten, wenn Einzelleuchten miteinander verbunden werden, wobei die Länge der jeweiligen Multifunktions-Hohlprofile so gewählt ist, dass sich bei durchgeführter Verbindung zweier Leuchten diese Verbindung nur als schmale Fuge zwischen den Abwinkelungen wahrgenommen wird.

Weitere vorteilhafte Merkmale und Ausgestaltungen der Erfindung werden nachfolgend bei der Beschreibung von Ausführungsbeispielen unter Bezugnahme auf die Zeichnungen erläutert.

In der Zeichnung zeigt:
- Fig. 1: eine perspektivische Schrägansicht einer Ausführungsform einer erfindungsgemäßen Leuchte von oben in nicht eingeschaltetem Zustand und damit durchsichtiger Lichtleitfläche,
- Fig. 2: eine Darstellung der Komponenten der Leuchte nach Fig. 1, wie sie im Wesentlichen vor der Montage vorliegen,
- Fig. 3: eine perspektivische Teildarstellung eines Multifunktions-Hohlprofils mit anschraubbarem Endteil für Leuchten nach den Fig. 1 und 2,
- Fig. 4: eine perspektivische Teil-/Schrägansicht eines Multifunktions-Hohlprofils mit angebrachten LED-Streifen,
- Fig. 5: eine schematische Teil-Querschnittsdarstellung einer erfindungsgemäßen Leuchte,
- Fig. 6: eine schematische Teil-Querschnittsdarstellung einer weiteren Ausführungsform einer Leuchte nach der Erfindung,
- Fig. 7: eine Teil-Draufsicht zweier miteinander zu verbindender Leuchten,
- Fig. 8: eine Teil-Querschnittsdarstellung des Verbindungsbereichs von miteinander verbundenen Leuchten, und
- Fig. 9: eine schematische Darstellung einer Lichtleitscheibe mit eingeprägten Mikroprismen in Form von Doppelpunkt-Auskoppelprismen.

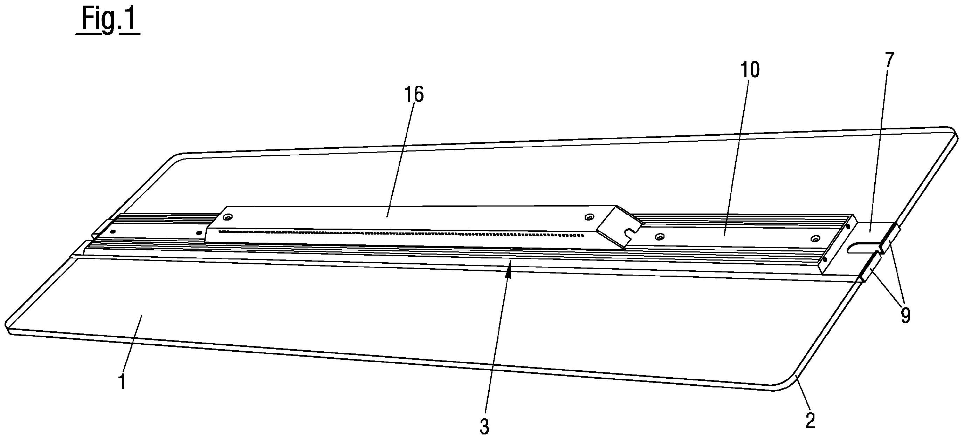

Fig. 1 zeigt eine erfindungsgemäße Pendelleuchte in nicht eingeschaltetem Zustand, wobei die sich beidseitig einer zentralen Funktionseinheit erstreckende Lichtleitscheibe 1 durchsichtig ist. Diese eine rahmenlose Lichtfläche bildende Lichtleitscheibe 1 besteht bevorzugt aus einem lichtdurchlässigen Kunststoffmaterial, wie z.B. Plexiglas, und ist - was in dieser Darstellung nicht zu sehen ist - zumindest an einer, insbesondere an der vom Raum abgewandten Oberfläche vollflächig mit mikro-optischen Strukturen versehen, die jeweils winzige Licht-Auskopplungspunkte bilden. Die Stirnseiten der Lichtleitscheibe 1 sind mit einer Reflexionsschicht 2 bedeckt, die auftreffendes Licht in die Scheibe zurückreflektiert. Die Funktionseinheit 3 erstreckt sich im Wesentlichen über die gesamte Länge der Leuchte und wird im Einzelnen noch beschrieben.

Die Funktionseinheit 3 umfasst ein Multifunktions-Hohlprofil 10, auf dem ein die notwendige Elektronik aufnehmendes Abdeckgehäuse 16 angebracht ist.

In einer im Einzelnen noch zu erläuternden Weise ist die Lichtleitscheibe 1 klemmend gehaltert zwischen dem Multifunktions-Hohlprofil 10 und einem Trag- und Reflexionsprofil, des Enden in Form von Abwinkelungen 9 zu sehen sind, welche die Lichtleitscheibe 1 beidendig umfassen.

Bei dieser Ausführungsform besitzt das Multifunktions-Hohlprofil 10 eine geringere Länge als die Lichtleitscheibe 1, wobei die freibleibenden Bereiche durch Endteile 7 abgedeckt sind, die mit dem Multifunktions-Hohlprofil 10 verschraubbar sind.

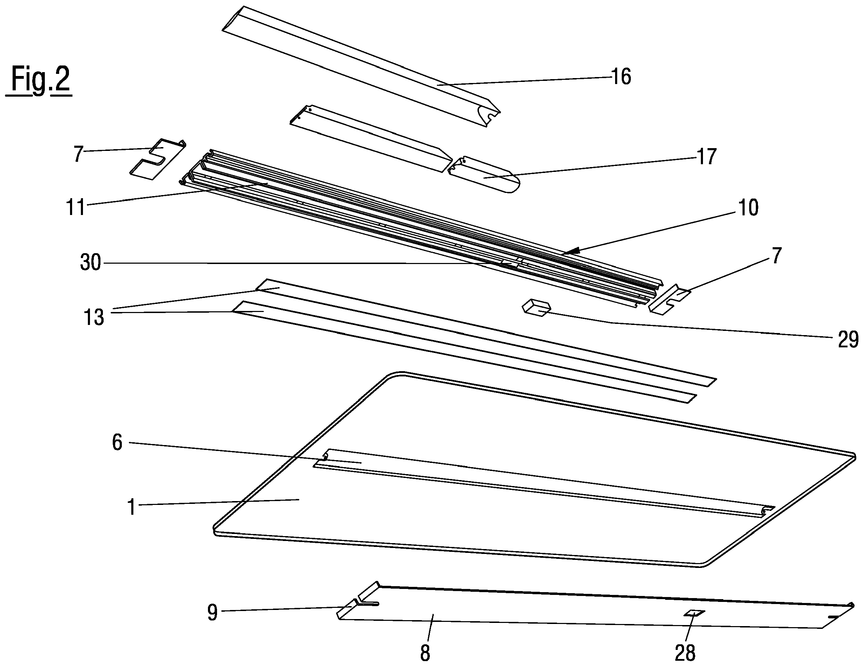

Fig. 2 zeigt die einzelnen Komponenten der Leuchte nach Fig. 1 nach Art einer Explosionsdarstellung.

Die bevorzugt einteilig ausgebildete Lichtleitscheibe 1 besitzt mittig eine langgestreckte Ausnehmung 6, wobei im Bereich der schmalen Stirnseite der Ausnehmung nach innen zeigende Vorsprünge vorgesehen sind, die zur formschlüssigen Kopplung mit der Funktionseinheit dienen.

Die Funktionseinheit umfasst eine geringe Anzahl von sandwichartig zusammengefügten Einzelkomponenten, nämlich - in der Zeichnung von unten nach oben betrachtet - ein Trag- und Reflexionsprofil 8, eine reflektierende Zwischenlage 13 in Form eines Deck- und Reflexionsprofils, ein Multifunktions-Hohlprofil 10 in Form eines Strangpressprofils aus Aluminium, eine Elektronikeinheit 17 und ein Abdeckgehäuse 16 für diese Elektronikeinheit.

Dem Multifunktions-Hohlprofil zugeordnet sind endseitig jeweils Endteile 7 entsprechend der Darstellung in Fig. 1.

Des Weiteren ist zu erkennen, dass das Multifunktionsprofil 10 als Träger der LED-Streifen 11 dient und - in diesem Ausführungsbeispiel - zur Aufnahme einer Sensoreinheit 29 ausgebildet ist, die zur Tageslichtsteuerung und/oder Präsenzmeldung dienen kann. Dazu ist zum einen eine Ausnehmung 30 in der Bodenwand des Hohlprofils vorgesehen, und das Trag- und Reflexionsprofil weist eine entsprechende Öffnung 28 auf, durch die sich das freie Ende des Sensors 29 erstrecken kann.

Die der Lichtleitscheibe 1 zugewandten Seiten des Tragprofils 8 sind ebenso wie die der Lichtleitscheibe 1 zugewandten Seiten der Zwischenlage 13 hoch reflektierend ausgeführt.

Ersichtlich ist aus dieser Darstellung, dass der Aufbau der Sandwichkonstruktion sehr einfach und in der Montage problemlos zu realisieren ist, wobei das Multifunktions-Hohlprofil und das mit ihr verschraubte Trag- und Reflexionsprofil 8 zusammen mit der Lichtleitscheibe 1 eine sehr stabile Verbundeinheit bilden.

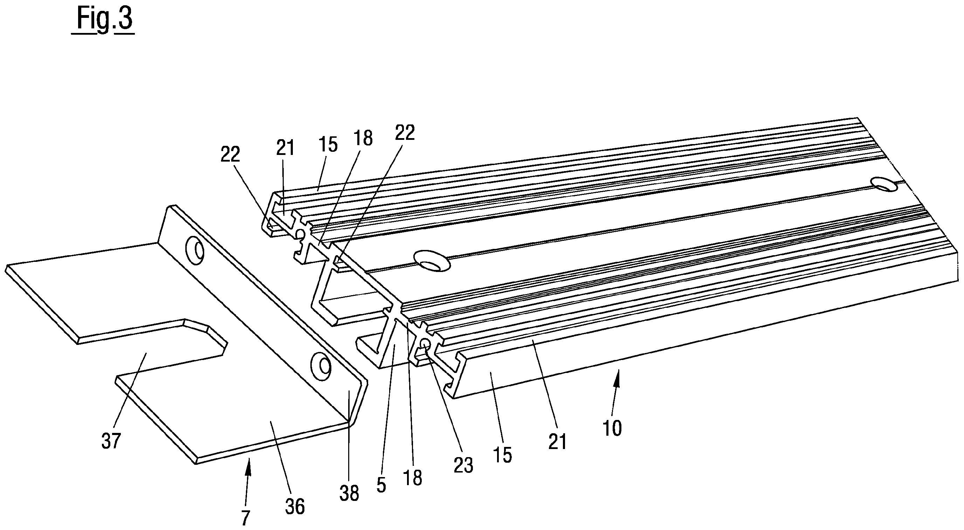

Ein für die Erfindung bedeutsames Element ist das in Fig. 3 gezeigte Multifunktions-Hohlprofil 10 aus stranggepresstem Aluminium.

Das Profil umfasst ein im Querschnitt etwa rechteckförmiges, einen Hohlkanal mit geschlitzter Bodenfläche bildendes Zentralteil 5, das über Verbindungsstege 18 beidseitig mit Flügelteilen 15 verbunden ist, die mit Schraubkanälen 23 zur Befestigung von Endteilen 7, sowie mehreren Funktionsnuten 21, 22 versehen sind und im Zusammenwirken mit dem Trag- und Reflexionsprofil 8 zur Halterung der Lichtleitscheibe 1 dienen.

Neben den mechanischen Funktionen, die über die jeweiligen Schlitze, Nuten und Öffnungen realisiert werden, stellt die Wärmeableitungsfunktion des Multifunktions-Hohlprofils 10 ein wichtiges Merkmal dar, denn zur Wärmeableitung dient nicht nur das kastenförmige Zentralteil 4, an dem die LED-Streifen befestigt sind, sondern zur Wärmeableitung tragen auch ganz wesentlich die mit dem Zentralteil 5 verbundenen Flügelteile 15 mit ihren entsprechend großen wirksamen Oberflächen bei.

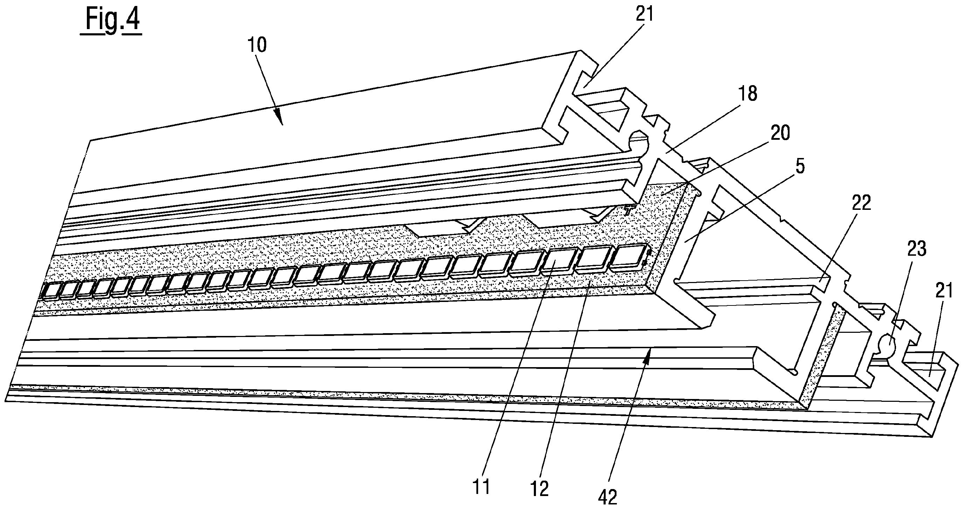

Die perspektivische Teildarstellung nach Fig. 4 zeigt das Multifunktions-Hohlprofil 10 mit daran über eine wärmeleitende Trägerlage 12 befestigten LED-Streifen 11. Die Trägerlagen 12 sind dabei an den vertikalen Außenseiten des Zentralteils 5 angebracht. Zwischen dem innenliegenden Schenkel der Flügelteile 15 und der Trägerlage sind Verkabelungsräume 20 ausgebildet. Es wurde bereits erwähnt, dass die Bodenwand des kastenförmigen Zentralteils 5 längsgeschlitzt ist, d.h. einen Längsschlitz 42 aufweist, durch den sich die Verschraubungen erstrecken, die für den Zusammenbau der Komponenten erforderlich sind.

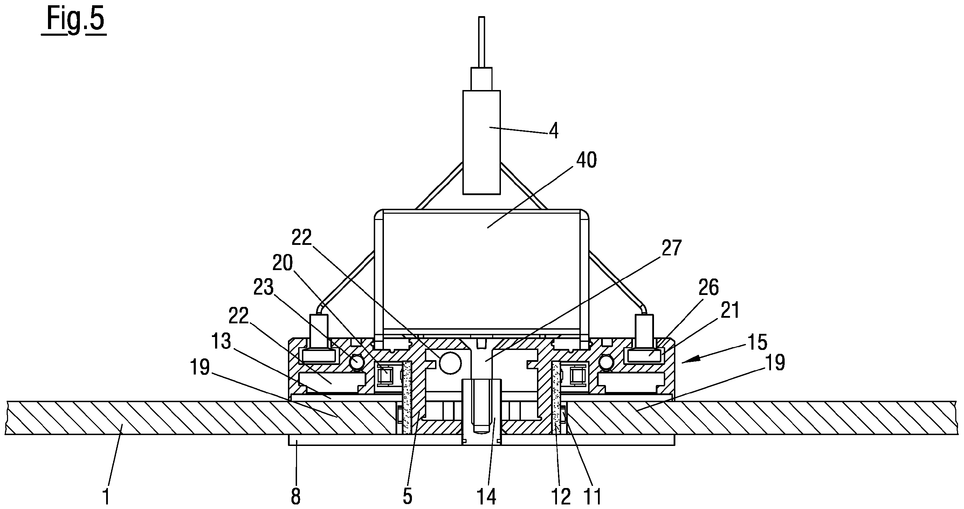

Fig. 5 zeigt in schematischer Weise eine Ausführungsform der Erfindung, bei der die erforderliche Elektronikeinheit 40 auf das Multifunktionsprofil 10 aufgesetzt ist. Aus der Darstellung ist ersichtlich, dass das Zentralteil 5 des Multifunktionsprofils mit den über wärmeleitende Trägerlagen 12 an ihm angebrachten LED-Streifen 11 so in die mittige Ausnehmung der Lichtleitscheibe 10 eingreift, dass die LED-Streifen 11 unmittelbar den Stirnflächen der Lichtleitscheibe 1 in der Ausnehmung gegenüberliegen. Die Lichtleitscheibe 1 ist in definierter Weise eingespannt zwischen dem Trag- und Reflexionsprofil 8 und den Flügelteilen 15 des Multifunktionsprofils 10, und zwar über reflektierende Zwischenlagen 13. Auf diese Weise werden Lichtverteilungs- und Ausblendkammern 19 gebildet, in der die den streifenförmigen LEDs 11 zugeordneten innenliegenden Lichteinkopplungsbereiche der Lichtleitscheibe aufgenommen sind. Zumindest die der Lichtleitscheibe zugewandten Flächen des Tragprofils 8 und der Zwischenlage 13 sind hochreflektierend ausgebildet, so dass sich aufgrund der sich in den Lichtverteilungskammern 19 ergebenden Totalreflexionen eine sehr gleichmäßige, streifenlose Verteilung des Lichts über die gesamte Fläche der Lichtleitscheibe 1 ergibt.

In die Tragfläche 8 ist eine Mehrzahl von Gewindebuchsen 14 eingepresst, die sich bei erfolgter Montage durch den bodenseitigen Schlitz 42 des Zentralteils 5 erstrecken und mit Schrauben zusammenwirken, die an der Deckwand des Zentralteils 5 abgestützt sind, so dass zum einen die sandwichartigen Komponenten exakt und definiert gegeneinander verspannt werden können und zum anderen ein geschlossenes und damit besonders biegesteifes Hohlprofil erhalten wird.

Oberhalb der LED-Streifenanordnung 11 befindet sich der Verkabelungsraum 20, in dem insbesondere Steckkontakte zur Herstellung der erforderlichen elektrischen Verbindungen untergebracht werden können.

Das Elektronikgehäuse 14 ist mit dem Multifunktionsprofil 10 ebenfalls verschraubt, wobei im Multifunktionsprofil geeignete Aufnahme- bzw. Führungsnuten zur Zentrierung des Gehäuses 40 ausgebildet sind.

Eine Aufhängung 4 für die Leuchte ist mit Seilabhängungselementen 26 versehen, die in Nuten 21 in den Flügelteilen 15 eingreifen und dort in jeweils geeigneter Weise positioniert werden können.

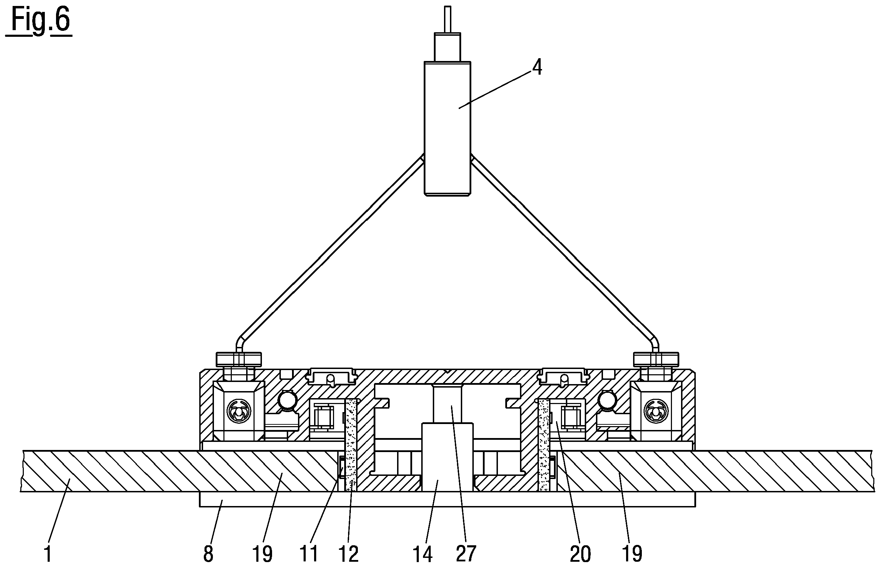

Die Ausführungsform einer Leuchte nach Fig. 6 unterscheidet sich von der Ausführungsform nach Fig. 5 im Wesentlichen dadurch, dass die Elektronikeinheit im Deckenbaldachin vorgesehen ist, so dass eine kabellose Ausführungsform vorliegt, bei der die Spannungszuführung zu den LEDs über die Abhängeseile erfolgt. Auf diese Weise entsteht der Eindruck einer schwerelos im Raum schwebenden Lichtfläche von ultraflacher Form. Die Seilabhängungselemente müssen bei dieser Ausführungsform natürlich isolierend ausgebildet sein.

Ersichtlich sind in dieser Darstellung auch noch flache Kanäle in dem Übergangsbereich zwischen Zentralteil und Flügelteilen an der Oberseite des Multifunktionsprofils. Diese mit einer flachen Abdeckung versehenen Kabelführungskanäle werden insbesondere dann benutzt, wenn mehrere Leuchten aneinandergereiht werden müssen und die Stromzuführung von einer Leuchte zur anderen Leuchte über diese Kabelkanäle praktisch unsichtbar gestaltet werden kann.

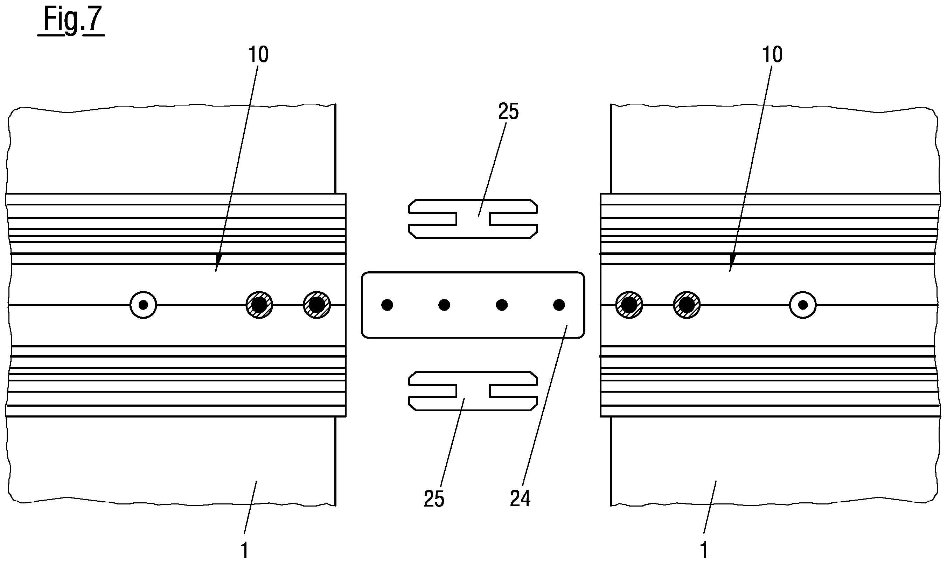

Fig. 7 zeigt das Prinzip der Verbindung aufeinanderfolgender Leuchten zu einer Doppelleuchte oder einem Lichtband vorgebbarer Länge.

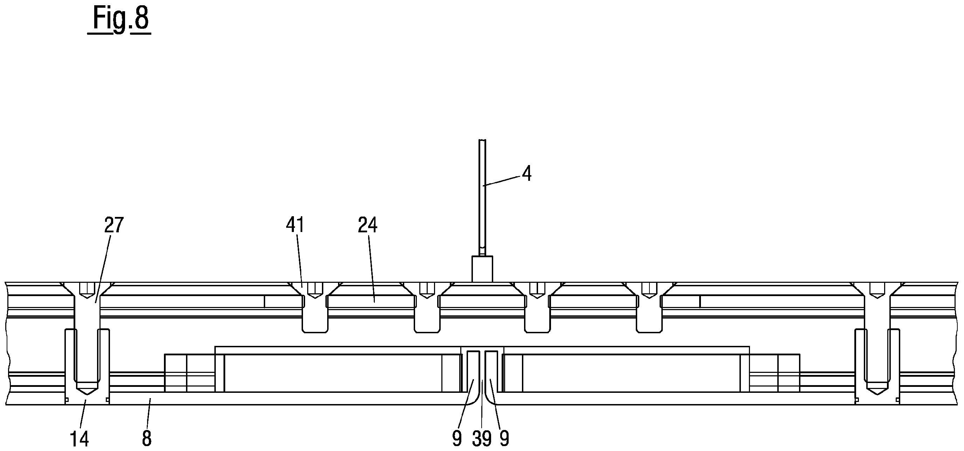

Dazu werden Multifunktions-Hohlprofile 10 verwendet, deren Länge - wie dies in Fig. 8 zu sehen ist - vorzugsweise nur geringfügig größer ist als die Länge des zugehörigen abgewinkelten Tragprofils 8.

Zwei aneinanderstoßende Multifunktionsprofile 10 werden dabei durch einfache mechanische Elemente stabil zu Mehrfach-Leuchten gekoppelt. Bei den mechanischen Elementen handelt es sich gemäß dargestelltem Ausführungsbeispiel um ein zentrales gelasertes Edelstahlelement 24 sowie zwei gelaserte Kunststoff-Kupplungsteile 25, welche die Profile während der Montage zusammenhalten, worauf die beiden Multifunktionsprofile 10 über das zentrale Kupplungselement 24 verschraubt werden.

Fig. 8 zeigt zwei miteinander gekoppelte Einzelleuchten in der verbundenen Form. Das zentrale Kupplungselement 24, das von der Nut 22 im Zentralteil 5 aufgenommen ist, wird mittels mehrerer Schrauben 41 mit dem Zentralteil 5 verschraubt, so dass sich eine form- und kraftschlüssige, äußerst stabile Verbindung ergibt. Bevorzugt ist es bei dieser Verbindung zweier Leuchten, die Dimensionen so zu wählen, dass die einander gegenüberliegenden Abwinkelungen 9 des Tragprofils 8 einen geringen gegenseitigen Abstand aufweisen, so dass sich eine Fuge 39 ergibt, was vor allem in ästhetischer Hinsicht vorteilhaft ist.

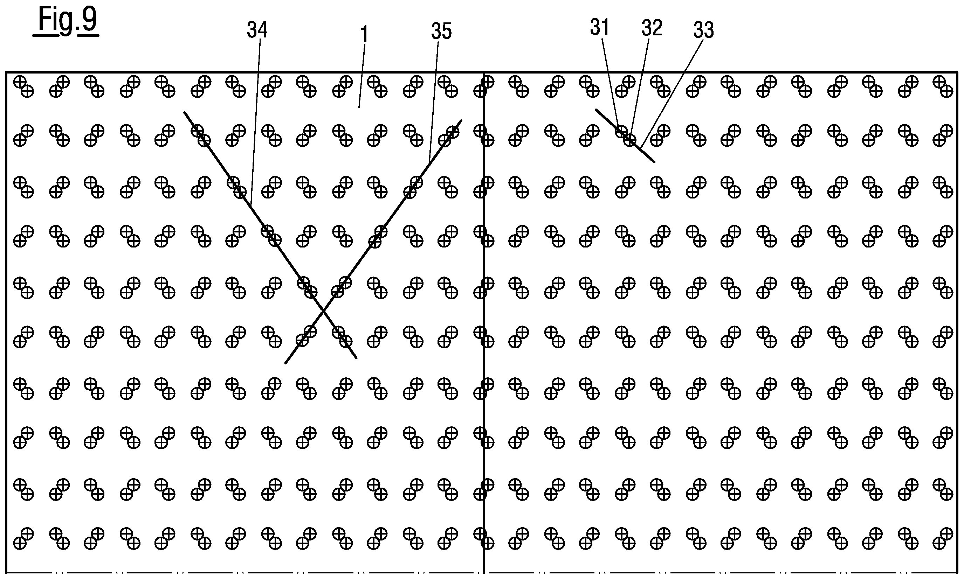

Die schematische Darstellung einer Lichtleitscheibe 1 nach Fig. 9 zeigt die erfindungsgemäße Besonderheit von Doppelpunkt-Auskoppelprismen 31, 32 in der vom Raum abgewandten Oberfläche der Lichtleitscheibe. Diese die Mikrostruktur der Lichtleitscheibe 1 bildende Vielzahl von Doppelpunkt-Auskoppelprismen 31, 32 kann so gestaltet sein, dass die beiden Auskoppelpunkte der Doppelpunkt-Auskoppelprismen direkt einandergrenzen, voneinander einen geringen Abstand haben oder sich geringfügig überschneiden bzw. ineinandergreifen. Die Doppelpunkt-Auskoppelprismen 31, 32 weisen eine Mittelachse 33 auf, wobei die definierten Mittelachsen 33 einer ersten Gruppe von Doppelpunkt-Auskoppelprismen 31, 32 auf einer ersten Geraden 34 und die Mittelachsen 33 einer zweiten Gruppe von Doppelpunkt-Auskoppelprismen 31, 32 auf einer zweiten Gerade 35 gelegen sind. Eine jeweils optimale Lichtverteilung, d.h. eine extrem breite Lichtverteilung indirekt und direkt kann dadurch beeinflusst und optimiert werden, dass diese beiden Geraden unter einem wählbaren, d.h. vorgebbaren, insbesondere spitzen Winkel zueinander angeordnet werden.

Zu erwähnen ist noch, dass die in den Ausführungsbeispielen gezeigten rechteckigen Formate der Leuchte nicht beschränkend sind. Das erfindungsgemäße Prinzip lässt sich auch auf weitere Formate, beispielsweise auf die Formate Quadrat, Raute oder rund anwenden, und zwar optional als Pendelversion und auch als Anbauversion.

### Bezugszeichenliste

- 1: Lichtleitscheibe
- 2: Reflexionsschicht
- 3: Funktionseinheit
- 4: Aufhängung
- 5: Zentralteil
- 6: langgestreckte Ausnehmung
- 7: Endteil
- 8: Trag- und Reflexionsprofil
- 9: Abwinkelung
- 10: Multifunktions-Hohlprofil
- 11: LED-Streifen
- 12: wärmeleitende Trägerlage
- 13: reflektierende Zwischenlage
- 14: Gewindebuchsen
- 15: Flügelteil
- 16: Abdeckgehäuse
- 17: elektronische Komponenten
- 18: Verbindungssteg
- 19: Lichtverteilungs- und Ausblendkammer
- 20: Verkabelungsraum
- 21: Profilnuten für Seilabhängung
- 22: Profilnuten für Kupplungselemente
- 23: Schraubkanal
- 24: verschraubbare Kupplungselemente
- 25: steckbare Kupplungselemente
- 26: Seilabhängeelemente
- 27: Schrauben
- 28: Öffnung für Sensor
- 29: Sensoreinheit
- 30: Ausnehmung für Sensor
- 31: Auskoppelpunkt von Doppelpunkt-Auskoppelprismen
- 32: Auskoppelpunkt von Doppelpunkt-Auskoppelprismen
- 33: Mittelachse
- 34: erste Gerade
- 35: zweite Gerade
- 36: Abdeckschenkel
- 37: Ausnehmung
- 38: Befestigungsschenkel
- 39: Fuge
- 40: Elektronikgehäuse
- 41: Verschraubung
- 42: Längsschlitz in Zentralteil

## Patentansprüche

1. Leuchte, insbesondere Pendelleuchte,
mit einer eine raumseitige Direktlichtfläche bildenden Lichtleitscheibe (1) und einer zumindest einer Längsseite der Lichtleitscheibe zugeordneten streifenförmigen Anordnung von LEDs (11) zur Einkopplung von Licht in die Lichtleitscheibe (1),
**dadurch gekennzeichnet,**
**dass** die rahmenlos ausgebildete Lichtleitscheibe (1) über ihren schmalseitigen Umfang mit einer Reflexionsschicht (2) und mittig mit einer schmalen, langgestreckten Ausnehmung (6) zur Aufnahme einer Funktionseinheit (3) versehen ist,
**dass** die Funktionseinheit (3) zumindest einen sich im Wesentlichen über die Länge der Ausnehmung (6) und in diese Ausnehmung (6) erstreckenden Hohlkörper in Form eines Multifunktions-Hohlprofils (10) mit einem Zentralteil (5) und seitlich angeformten, Profilnuten aufweisenden Flügelteilen (15) umfasst,
**dass** am Zentralteil (5) seitlich und der Lichtleitscheibe (1) gegenüberliegend streifenförmig angeordnete LEDs (11) angebracht sind,
**dass** die Lichtleitscheibe (1) zwischen den Flügelteilen (15) und einer mit dem Zentralteil (5) verschraubbaren, in ihrer Breite zumindest im Wesentlichen der Breite des Multifunktions-Hohlprofils (10) entsprechenden, insbesondere die Stirnseiten der Lichtleitscheibe (1) über Abwinkelungen (9) umgreifende Trägerfläche (8) gehaltert ist, und
**dass** beiderseits des Zentralteils (5) die reflektierend ausgebildete Trägerfläche (8) und eine ihr jeweils gegenüberliegende, an einem Flügelteil (15) anliegende, reflektierende Zwischenlage (13) eine Lichtverteilungs- und Ausblendkammer (19) bilden, in der die den streifenförmigen LEDs (11) zugeordneten innenliegenden Lichteinkopplungsbereiche der Lichtleitscheibe (1) aufgenommen sind.

2. Leuchte nach Anspruch 1,
**dadurch gekennzeichnet,**
**dass** das kastenförmig ausgebildete und bodenseitig einen Längsschlitz (42) aufweisende Zentralteil (5) mit der metallischen Trägerfläche (8) über in diese Trägerfläche (8) eingepresste Gewindebuchsen (14) verschraubbar ist und die über insbesondere einen Verbindungssteg (18) mit dem Zentralteil (5) verbundenen Flügelteile (15) Profilnuten (21) für verstellbare Seilabhängungselemente (26), Schraubkanäle (23) zur Befestigung von Endteilen (7) sowie Profilnuten (22) zur Aufnahme von Kupplungselementen (24, 25) zur mechanischen Verbindung von aneinandergereihten Einzelleuchten aufweisen.

3. Leuchte nach Anspruch 2,
**dadurch gekennzeichnet,**
**dass** jeweils oberhalb der streifenförmigen LEDs (11) zwischen dem Zentralteil (5) und dem mit Profilnuten (21, 22) versehenen Bereich der Flügelteile (15) ein Verkabelungsraum (20) mit Steckklemmen zur Verbindung aufeinanderfolgend angeordneter LED-Streifenabschnitte sowie zur Verbindung mit den elektronischen Komponenten der Leuchte vorgesehen sind.

4. Leuchte nach Anspruch 3,
**dadurch gekennzeichnet,**
**dass** zur Aufnahme von elektronischen Komponenten wie Treiber, Controller und dergleichen ein separates Elektronikgehäuse (40) vorgesehen ist, das vorzugsweise über einen Nuteingriff auf den Zentralteil (5) positioniert und durch Verschraubung befestigt oder getrennt davon an einer Decke befestigbar ist.

5. Leuchte nach einem oder mehreren der vorhergehenden Ansprüche,
**dadurch gekennzeichnet,**
**dass** im kastenförmig ausgebildeten, bodenseitig geschlitzten Zentralteil (5) eine Sensoreinheit (29) zur Tageslichtsteuerung und/oder Präsenzmeldung insbesondere formschlüssig positioniert und über ein abgeschirmtes Anschlusskabel mit einem Controller verbunden ist.

6. Leuchte nach einem oder mehreren der vorhergehenden Ansprüche,
**dadurch gekennzeichnet,**
**dass** zumindest die raumabgewandte Oberfläche der Lichtleitscheibe (1) mit gleichmäßig über die Gesamtfläche verteilten, Licht reflektierenden, streuenden und auskoppelnden Mikrostrukturen oder stark reflektierenden Punktmustern versehen ist.

7. Leuchte nach Anspruch 6,
**dadurch gekennzeichnet,**
**dass** die Mikrostruktur aus einer Vielzahl von direkt aneinandergrenzenden, gering beabstandeten oder gering ineinandergreifenden Auskoppelpunkten (31, 32) von Doppelpunkt-Auskoppelprismen mit definierter Mittelachse (33) besteht, wobei die Doppelpunkt-Auskoppelprismen (31, 32) in geraden Reihen angeordnet sind und die Form rotationssymmetrischer Kegel oder Kegelstümpfe besitzen oder von mehrflächigen Prismen mit mehreckiger, beispielsweise quadratischer oder sechseckiger Grundfläche gebildet sind.

8. Leuchte nach Anspruch 7,
**dadurch gekennzeichnet,**
**dass** die definierten Mittelachsen (33) einer ersten Gruppe von Doppelpunkt-Auskoppelprismen (31, 32) auf einer ersten Geraden (24) und die Mittelachsen (33) einer zweiten Gruppe von Doppelpunkt-Auskoppelprismen (31, 32) auf einer zweiten Geraden (35) gelegen sind und diese beiden Geraden unter einem vorgebbaren, insbesondere spitzen Winkel zueinander verlaufen.

9. Leuchte nach einem oder mehreren der vorhergehenden Ansprüche,
**dadurch gekennzeichnet,**
**dass** LED-Streifenanordnungen (11) aus kleinflächigen, dicht aneinandergrenzend angeordneten LEDs mit jeweils wechselnder Farbtemperatur vorgesehen sind, und dass die einzelnen Farbkreise getrennt über einen Doppelkanaltreiber ansteuerbar sind.

10. Leuchte nach einem oder mehreren der vorhergehenden Ansprüche,
**dadurch gekennzeichnet,**
**dass** mit beiden Stirnseiten des Multifunktions-Hohlprofils (11) jeweils ein Befestigungsschenkel (38) eines Endteils (7) verschraubt ist, dessen abgewinkelter Abdeckschenkel (36) an der Lichtleitscheibe (1) anliegt und sich bis zum Ende der Lichtleitscheibe (1) erstreckt, wobei in der Schenkelfläche und dem ihr gegenüberliegenden Endbereich der Trägerfläche (8) einander entsprechende Ausnehmungen (37) vorgebbarer Form vorgesehen sind.

11. Leuchte nach einem oder mehreren der vorhergehenden Ansprüche,
**dadurch gekennzeichnet,**
**dass** zur Ausbildung einer Doppelleuchte oder zur Ausbildung von Lichtbändern Multifunktions-Hohlprofile (10) einander stirnseitig kontaktierend über formschlüssig in eine deckwandseitige Nut (22) des Zentralteils (5) und in Profilnuten (22) der Flügelteile (15) eingreifende Kopplungs- und Führungslaschen (24, 25) verbindbar sind.

12. Leuchte nach Anspruch 11,
**dadurch gekennzeichnet,**
**dass** zumindest die in die Nuten (22) der Zentralteile (5) aufeinanderfolgender Multifunktions-Hohlprofile (10) eingreifende Lasche (24) mit den Zentralteilen (5) verschraubbar ist.

13. Leuchte nach Anspruch 11,
**dadurch gekennzeichnet,**
**dass** die Trägerfläche (8) an ihren Enden (9) die Stirnseiten der Lichtleitscheibe (1) umgreifend abgewinkelt ist und dass bei miteinander verbundenen Leuchten zwischen den abgewinkelten Enden (9) jeweils eine schmale Fuge (39) ausgebildet ist.

## Claims

1. A luminaire, in particular a suspended luminaire,
comprising a light guide panel (1) forming a room-side direct light surface; and a strip-shaped arrangement of LEDs (11) associated with at least one longitudinal side of the light guide panel for coupling light into the light guide panel (1),
**characterized in that**
the frameless light guide panel (1) is provided with a reflection layer (2) over its narrow-side periphery and is centrally provided with a narrow, elongated recess (6) for receiving a functional unit (3);
**in that** the functional unit (3) comprises at least one hollow body, extending substantially over the length of the recess (6) and into this recess (6), in the form of a multifunctional hollow section (10) comprising a central part (5) and laterally molded leaf parts (15) having profile grooves;
**in that** LEDs (11) arranged in a strip-shaped manner are laterally attached to the central part (5) and opposite the light guide panel (1);
**in that** the light guide panel (1) is held between the leaf parts (15) and a carrier surface (8) which can be screwed to the central part (5), which at least substantially corresponds in its width to the width of the multifunctional hollow section (10) and which in particular engages around the end faces of the light guide panel (1) via angled portions (9); and
**in that**, at both sides of the central part (5), the reflective carrier surface (8) and a reflective intermediate layer (13) which is disposed opposite it in each case and which contacts a leaf part (15) form a light distribution and masking chamber (19) in which the inwardly disposed light coupling regions of the light guide panel (1) associated with the strip-shaped LEDs (11) are received.

2. A luminaire in accordance with claim 1,
**characterized in that**
the box-shaped central part (5) having a longitudinal slit (42) at the base side can be screwed to the metallic carrier surface (8) via threaded bushings (14) pressed into said carrier surface (8); and **in that** the leaf parts (15) connected to the central part (5) via a connection web (18), in particular one connection web (18), have profile grooves (21) for adjustable cable suspension elements (26), screw channels (23) for fastening end parts (7) and profile grooves (22) for receiving coupling elements (24, 25) for mechanically connecting individual luminaires arranged next to one another.

3. A luminaire in accordance with claim 2,
**characterized in that**
a cabling space (20) is in each case provided above the strip-shaped LEDs (11) between the central part (5) and the region of the leaf parts (15) provided with profile grooves (21, 22), said cabling space (20) comprising plug-in terminals for connecting consecutively arranged LED strip sections and for connecting to the electronic components of the luminaire.

4. A luminaire in accordance with claim 3,
**characterized in that**
a separate electronics housing (40) is provided for receiving electronic components such as drivers, controllers and the like and is preferably positioned on the central part (5) via a groove engagement and is fastened by a screw connection or is fastenable, separately therefrom, to a ceiling.

5. A luminaire in accordance with one or more of the preceding claims,
**characterized in that**
a sensor unit (29) for daylight control and/or for presence detection is in particular positioned in a form-fitting manner in the box-shaped central part (5) slit at the base side and is connected to a controller via a shielded connector cable.

6. A luminaire in accordance with one or more of the preceding claims,
**characterized in that**
at least the surface of the light guide panel (1) remote from the room is provided with microstructures which are distributed uniformly over the total surface and which reflect, scatter and decouple light or is provided with highly reflective dot patterns.

7. A luminaire in accordance with claim 6,
**characterized in that**
the microstructure comprises a plurality of directly adjacent, slightly spaced apart or slightly mutually engaging decoupling points (31, 32) of dual-point decoupling prisms having a defined center axis (33), with the dual-point decoupling prisms (31, 32) being arranged in straight rows and having the shape of rotationally symmetrical cones or truncated cones or being formed by multi-surface prisms having a polygonal base surface, for example, a square or hexagonal base surface.

8. A luminaire in accordance with claim 7,
**characterized in that**
the defined center axes (33) of a first group of dual-point decoupling prisms (31, 32) are disposed on a first straight line (24) and the center axes (33) of a second group of dual-point decoupling prisms (31, 32) are disposed on a second straight line (35) and these two straight lines extend at a predefinable angle, in particular an acute angle, to one another.

9. A luminaire in accordance with one or more of the preceding claims,
**characterized in that**
LED strip arrangements (11) comprising small-surface LEDs arranged closely adjacent to one another and having respective changing color temperatures are provided; and **in that** the individual color circles can be controlled separately via a dual-channel driver.

10. A luminaire in accordance with one or more of the preceding claims,
**characterized in that**
a respective fastening limb (38) of an end part (7) whose angled cover limb (36) contacts the light guide panel (1) and extends up to the end of the light guide panel (1) is screwed to both end faces of the multifunctional hollow section (11), with mutually corresponding recesses (37) having predefinable shapes being provided in the limb surface and in the end region of the carrier surface (8) disposed opposite it.

11. A luminaire in accordance with one or more of the preceding claims,
**characterized in that**,
to form a dual luminaire or to form light strips, multifunctional hollow sections (10) can be connected to one another in a manner contacting one another at the end faces via coupling and guide lugs (24, 25) engaging in a form-fitting manner into a top-side groove (22) of the central part (5) and into profile grooves (22) of the leaf parts (15).

12. A luminaire in accordance with claim 11,
**characterized in that**
at least the tab (24) which engages into the grooves (22) of the central parts (5) of consecutive multifunctional hollow sections (10) can be screwed to the central parts (5).

13. A luminaire in accordance with claim 11,
**characterized in that**
the carrier surface (8) is angled at its ends (9) in a manner engaging around the end faces of the light guide panel (1); and **in that** a respective narrow joint (39) is formed between the angled ends (9) in luminaires connected to one another.

## Revendications

1. Luminaire, en particulier luminaire suspendu,
comportant un disque conducteur de lumière (1) formant une surface de lumière directe côté local, et un agencement en forme de bande de LEDs (11), associé à au moins un côté longitudinal du disque conducteur de lumière, pour injecter la lumière dans le disque conducteur de lumière (1),
**caractérisé en ce que**
le disque conducteur de lumière (1) réalisé sans cadre est pourvu, sur son pourtour côté étroit, d'une couche réfléchissante (2) et, au centre, d'un évidement étroit allongé (6) pour recevoir une unité fonctionnelle (3), l'unité fonctionnelle (3) comprend au moins un corps creux s'étendant sensiblement sur la longueur de l'évidement (6) et jusque dans cet évidement (6) et présentant la forme d'un profilé creux multifonctionnel (10) pourvu d'une partie centrale (5) et de parties d'aile (15) conformées latéralement et présentant des rainures profilées,
des LEDs (11) disposées en forme de bandes sont montées latéralement sur la partie centrale (5) et à l'opposé du disque conducteur de lumière (1), le disque conducteur de lumière (1) est retenu entre les parties d'aile (15) et une surface de support (8) qui peut être vissée sur la partie centrale (5) et qui, quant à sa largeur, correspond au moins sensiblement à la largeur du profilé creux multifonctionnel (10) et qui entoure en particulier les faces frontales du disque conducteur de lumière (1) par des coudes (9), et
de part et d'autre de la partie centrale (5), la surface de support (8) réalisée réfléchissante et une couche intermédiaire réfléchissante (13) située en face de celle-ci et reposant contre une partie d'aile (15) constituent une chambre de répartition de lumière et de masquage (19) dans laquelle sont logées les zones intérieures d'injection de lumière du disque conducteur de lumière (1) associées aux LEDs (11) en forme de bande.

2. Luminaire selon la revendication 1,
**caractérisé en ce que**
la partie centrale (5) réalisée en forme de caisson et présentant, du côté fond, une fente longitudinale (42) peut être vissée sur la surface de support (8) métallique par des douilles taraudées (14) enfoncées dans cette surface de support (8), et les parties d'aile (26) reliées à la partie centrale (15) en particulier par une barrette de liaison (18) présentent des rainures profilées (21) pour des éléments de suspension de câbles (26) réglables, des canaux de vissage (23) pour fixer des pièces d'extrémité (7) ainsi que des rainures profilées (22) pour loger des éléments de couplage (24, 25) destinés à la connexion mécanique de luminaires individuels disposés les uns à côté des autres.

3. Luminaire selon la revendication 2,
**caractérisé en ce que**
un espace de câblage (20) pourvu de bornes d'enfichage pour le raccordement de portions de bande de LED disposées successivement et pour le raccordement aux composants électroniques du luminaire est prévu respectivement au-dessus des LEDs (11) en forme de bande entre la partie centrale (5) et la zone des parties d'aile (15) pourvue de rainures profilées (21, 22).

4. Luminaire selon la revendication 3,
**caractérisé en ce que**
un boîtier électronique séparé (40) est prévu pour loger les composants électroniques tels que des circuits d'attaque, des contrôleurs et similaires, qui est de préférence positionné sur la partie centrale (5) par l'intermédiaire d'une rainure d'engagement et qui est fixé par vissage ou qui peut être fixé séparément à un plafond.

5. Luminaire selon l'une ou plusieurs des revendications précédentes,
**caractérisé en ce que**
un ensemble capteur (29) pour la commande de la lumière du jour et/ou pour la détection de présence est positionné en particulier par coopération de forme dans la partie centrale (5) réalisée en forme de caisson et fendue du côté fond, et est relié à un contrôleur par un câble de raccordement blindé.

6. Luminaire selon l'une ou plusieurs des revendications précédentes,
**caractérisé en ce que**
au moins la surface du disque conducteur de lumière (1) détournée du local est pourvue de microstructures réparties régulièrement sur toute la surface, qui réfléchissent, diffusent et extraient la lumière, ou de motifs de points fortement réfléchissants.

7. Luminaire selon la revendication 6,
**caractérisé en ce que**
la microstructure est constituée d'une multitude de points d'extraction (21, 32) directement adjacents, légèrement espacés ou légèrement imbriqués de prismes d'extraction à point double ayant un axe central défini (33), les prismes d'extraction à point double (31, 32) étant disposés en rangées droites et ayant la forme de cônes ou de troncs de cône à symétrie de révolution ou étant constitués par des prismes à surfaces multiples ayant une surface de base polygonale, par exemple carrée ou hexagonale.

8. Luminaire selon la revendication 7,
**caractérisé en ce que**
les axes centraux définis (33) d'un premier groupe de prismes d'extraction à point double (31, 32) sont situés sur une première droite (24), et les axes centraux (33) d'un deuxième groupe de prismes d'extraction à point double (31, 32) sont situés sur une deuxième droite (35), et
ces deux droites s'étendent sous un angle prédéterminé, en particulier aigu, l'une par rapport à l'autre.

9. Luminaire selon l'une ou plusieurs des revendications précédentes,
**caractérisé en ce que**
il est prévu des agencements de LEDs en bande (11) composés de LEDs de petites surfaces et disposées en étant étroitement adjacentes les unes aux autres, ayant chacune des températures de couleur variables, et **en ce que**
les cercles de couleur individuels peuvent être pilotés séparément par un circuit d'attaque à double canal.

10. Luminaire selon l'une ou plusieurs des revendications précédentes,
**caractérisé en ce que**
une branche de fixation (38) d'une pièce d'extrémité (7) est vissée respectivement sur les deux faces frontales du profilé creux multifonctionnel (11), dont la branche de recouvrement (36) coudée repose contre le disque conducteur de lumière (1) et s'étend jusqu'à l'extrémité du disque conducteur de lumière (1), des évidements (37) ayant une forme prédéterminée et se correspondant entre eux étant prévus dans la surface de la branche et dans la zone d'extrémité de la surface de support (8) opposée à ladite surface de branche.

11. Luminaire selon l'une ou plusieurs des revendications précédentes,
**caractérisé en ce que**
pour réaliser un luminaire double ou pour réaliser des bandes lumineuses, des profilés creux multifonctionnels (10) peuvent être reliés en étant en contact mutuel du côté frontal par des pattes de couplage et de guidage (24, 25) qui s'engagent par coopération de formes dans une rainure (22) côté paroi de couverture de la partie centrale (5) et dans des rainures profilées (22) des parties d'aile (15).

12. Luminaire selon la revendication 11,
**caractérisé en ce que**
au moins la patte (24) qui s'engage dans les rainures (22) des parties centrales (5) de profilés creux multifonctionnels (10) successifs peut être vissée sur les parties centrales (5).

13. Luminaire selon la revendication 11,
**caractérisé en ce que**
la surface de support (8) est coudée à ses extrémités (9) en entourant les faces frontales du disque conducteur de lumière (1), et **en ce que**
une jointure étroite (39) respective est réalisée entre les extrémités (9) coudées, dans le cas de luminaires reliés entre eux.
